(19) Europäisches Patentamt
European Patent Office
Office européen des brevets

(11) **EP 3 853 490 B1**

(12) **EUROPÄISCHE PATENTSCHRIFT**

(45) Veröffentlichungstag und Bekanntmachung des Hinweises auf die Patenterteilung:
**13.03.2024   Patentblatt 2024/11**

(21) Anmeldenummer: **19769136.3**

(22) Anmeldetag: **13.09.2019**

(51) Internationale Patentklassifikation (IPC):
**F16D 1/072** $^{(2006.01)}$

(52) Gemeinsame Patentklassifikation (CPC):
**F16D 1/072; F16D 1/12; H02K 1/28; H02K 7/003;**
F16D 3/06; F16D 2001/102

(86) Internationale Anmeldenummer:
**PCT/EP2019/074501**

(87) Internationale Veröffentlichungsnummer:
**WO 2020/058122 (26.03.2020 Gazette 2020/13)**

(54) **WELLENANORDNUNG**

SHAFT ARRANGEMENT

DISPOSITIF D'ARBRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2018   DE 102018122977**

(43) Veröffentlichungstag der Anmeldung:
**28.07.2021   Patentblatt 2021/30**

(73) Patentinhaber: **Muhr und Bender KG**
**57439 Attendorn (DE)**

(72) Erfinder:
• **DÖNGES, Benjamin**
**44379 Dortmund (DE)**
• **BUCHKREMER, Stefan**
**50996 Köln (DE)**
• **ROLFES, Maximilian**
**59846 Sundern (DE)**
• **KOBELEV, Vladimir**
**57439 Attendorn (DE)**

(74) Vertreter: **Neumann Müller Oberwalleney Patentanwälte PartG mbB**
**Overstolzenstraße 2a**
**50677 Köln (DE)**

(56) Entgegenhaltungen:
**DE-A1-102010 047 445     DE-C1- 19 521 755**
**US-A- 4 006 993     US-A- 5 048 998**

## EP 3 853 490 B1

**Beschreibung**

Die Erfindung betrifft eine Verbindungsanordnung mit einer Welle und einer Nabe, insbesondere für eine Elektromaschine eines Kraftfahrzeugs.

Aus der DE 196 24 048 ist ein Verfahren zur Herstellung einer reibschlüssigen Verbindung einer Welle und einer Nabe bekannt. Um beim Zusammenfügen eine Oberflächenbeschädigung zu vermeiden, wird eines der Bauteile durch Aufbringen einer Kraft plastisch oval oder polygonal verformt, dann durch Aufbringen einer weiteren Kraft das ovale oder polygone Bauteil weitgehend elastisch verrundet, die Bauteile unter Beibehaltung der weiteren Kraft montiert, und anschließend die weitere Kraft aufgehoben, so dass das runde Bauteil in eine ovale oder polygonale Form zurückfedert, so dass die Bauteile mittels Presssitz miteinander verbunden sind.

Aus der DE 10 2010 047 445 A1 ist eine Welle-Nabe-Verbindung bekannt. Die Welle weist in dem Bereich, der in die Nabe eingesteckt ist, ein Wellenprofil als Außenkontur auf. Die Öffnung der Nabe weist in dem Bereich, in dem die Welle eingesteckt ist, ein Hohlprofil als Innenkontur auf. Die Außenkontur der Welle und die Innenkontur der Nabe weisen in einer Montagestellung über ihren gesamten Umfang einen Spaltabstand zueinander auf. In einer Funktionsstellung, bei der die Welle und die Nabe relativ zueinander um einen Winkel verdreht sind, sind die Welle und die Nabe in mindestens zwei Kontaktbereichen miteinander in Kontakt.

Aus der DE 102 24 477 A1 ist eine lösbare Welle-Nabe-Verbindung bekannt, die mehrere Toleranzausgleichseinrichtungen zwischen der Welle und der Nabe umfasst. Die Toleranzausgleichseinrichtung umfasst mehrere gleichmäßig über den Umfang der Welle oder der Nabe verteilte und mit dieser fest verbundene Stege, die jeweils einen unter Vorspannung an der Nabe oder der Welle anliegenden Federarm aufweisen.

Aus der DE 10 2010 039 008 A1 sind ein Rotor und ein Herstellungsverfahren hierfür bekannt. Der Rotor weist eine Rotorwelle und ein Blechpaket auf, das entlang eines Längsabschnitts um die Rotorwelle herum angeordnet ist. Die Rotorwelle weist entlang des Längsabschnitts einen ersten Oberflächenbereich auf, dessen Form einen Kreiszylinder beschreibt, sowie einen zweiten Oberflächenbereich, der durch Strukturelemente gebildet ist, die sich mit Bezug auf die Rotorachse radial nach außen über den ersten Oberflächenbereich erheben.

Aus der DE 195 21 755 C1 ist ein Verbindungssystem zum lösbaren Verbinden zweier Bauteile bekannt. Hierfür wird ein Bauteil während des Verbindungsvorgangs zeitweise so verformt, dass eine wirksame Umfangskontur der entsprechenden Umfangskontur des anderen Bauteils mit vorgegebenem Spiel entspricht. Nach dem Positionieren beider Bauteile wird durch zumindest teilweise Rückverformung eine feste Druckanlage der beiden wirksamen Umfangskonturen erzeugt.

Aus der WO 99 65643 A1 ist ein Verfahren zur Herstellung einer lösbaren Verbindung zwischen einem Hohlkörper und einem Schaft bekannt. Dabei wird ein Hohlkörper durch radiale Druckkräfte derart elastisch verformt, dass eine wirksame Umfangkontur der entsprechenden wirksamen Umfangskontur des Schafts mit vorgegebenem Spiel entspricht, so dass die beiden Bauteile ineinandersteckbar sind. Nach dem Zusammenstecken der beiden Bauteile wird eine Druckverbindung hergestellt, indem der Hohlkörper durch Verringerung der radialen Druckkräfte elastisch rückverformt wird.

Aus der DE 10 2015 012 912 A1 ist ein Rotor für eine Elektromaschine bekannt, der eine Rotorwelle und mehrere hieran formschlüssig befestigte Lamellenpakete aufweist. Die Rotorwelle ist im Bereich der Lamellenpakete durch Formschlusselemente im Querschnitt unrund ausgebildet.

Aus der DE 10 2016 202 416 A1 ist eine Rotorwellenanordnung für einen Rotor eines Elektromotors bekannt. Die Anordnung weist eine Hohlwelle zur Aufnahme eines Rotorkörpers, und einen in der Hohlwelle angeordneten Kühlkörper auf.

Aus der DE 10 2016 215 760 A1 ist ein Rotor für eine Elektromaschine eines Fahrzeugs bekannt. Der Rotor weist eine Zentralwelle und ein Blechpaket auf, das zwischen zwei Haltescheiben angeordnet ist.

Aus der DE 10 2016 215 979 A1 ist ein Rotor mit einer Rotorwelle und einem Blechpaket bekannt. Die Rotorwelle hat eine Außenoberfläche mit einer Profilierung aus einer Mehrzahl von axial verlaufenden Materialaussparungen, in welche das Blechpaket mit einer korrespondierenden Struktur formschlüssig eingreift.

Aus der DE 10 2008 043 488 A1 ist ein Welle-Nabe-Bauteil bekannt mit einer Vollwelle und einem Nabenbauteil. Die Vollwelle hat eine gehärtete Randschicht und ist in Teilbereichen derart umgeformt, dass diese mehrere radial vorstehende Bereiche und eingedrückte Bereiche aufweist.

Es ist bekannt, einen Nabenkörper auf einer Welle im Presssitz zu befestigen, so dass zwischen den genannten Teilen Drehmoment übertragen werden kann. Dabei müssen, je nach technischen Anforderungen, die jeweiligen Durchmesser von Welle und Nabe mit hoher Genauigkeit gefertigt sein. Bei hohen Drehzahlen der Verbindungsanordnung von Welle und Nabe kann es zu einer Verminderung der Presssitzkräfte kommen.

Es ist Aufgabe der vorliegenden Erfindung, eine Verbindungsanordnung mit einer Welle und einer Nabe vorzuschlagen, die auch bei hohen Drehzahlen eine sichere Verbindung und damit zuverlässige Drehmomentübertragung gewährleistet, die ferner eine hohe Lebensdauer aufweist und die einfach und kostengünstig herstellbar ist.

Zur Lösung wird eine Wellenanordnung nach Anspruch 1 vorgeschlagen, umfassend: eine Hohlwelle mit einer Drehachse und einen Nabenkörper, der mit einer Innenumfangsfläche mit der Hohlwelle kraftschlüssig verbunden ist, wobei die Hohlwelle im Querschnitt betrachtet eine umlaufend geschlossene Wandung mit mehreren über den Umfang verteilten Stützabschnitten, die mit dem Nabenkörper in Anlagekontakt sind, und Federabschnitten, die von der Innenumfangsfläche des Nabenkörpers beabstandet sind, aufweist, wobei Innenflächenbereiche der Federabschnitte auf einem kleineren Radius um die Drehachse liegen, als Innenflächenbereiche der Stützabschnitte. Dabei ist insbesondere vorgesehen, dass die Wandung eine variable Dicke über dem Umfang aufweist, wobei die Dicke in den Stützabschnitten vorzugsweise geringer ist als in den Federabschnitten.

Ein Vorteil ist, dass durch die Ausgestaltung der Hohlwelle mit umfangsverteilten Stützabschnitten und Federabschnitten ein Pressverband hergestellt wird, der auch größere Toleranzen oder betriebsbedingte Verformungen ausgleichen kann. Zwischen dem Nabenkörper und der Hohlwelle ist aufgrund des Pressverbands eine kraftschlüssige Verbindung ausgebildet, die so ausgelegt ist, dass die gewünschten Drehmomente bei allen Betriebsbedingungen über die gesamte Lebensdauer der Wellenanordnung sicher übertragen werden. Aufgrund der umfangsverteilten Federabschnitte wirken von diesen Kräfte in Umfangsrichtung und in radiale Richtung auf die jeweils dazwischenliegenden Stützabschnitte ein, die somit federnd an die Kontaktfläche des Nabenkörpers angepresst werden. Die Hohlwelle wirkt dadurch insgesamt als radiale Wellfeder, die auch bei elastischer Verformung des Nabenkörpers weiterhin Radialkräfte auf den Nabenkörper ausübt. Somit wird in vorteilhafter Weise ein Geometrieausleich zur Kompensation von Maß- und Lageabweichungen sowie thermisch- und/oder fliehkraftbedingten Verformungen zwischen Welle und Nabe bereitgestellt. Aufgrund der radialelastischen federnden Wirkung des Wellenrohres ist stets ein sicherer Reibkontakt zwischen den Stützabschnitten des Wellenrohres und den Kontaktflächen des Nabenkörpers gebildet, so dass die Fertigungstoleranzen der in Kontakt stehenden Oberflächen relativ grob gehalten werden können. Insbesondere ist es möglich, auf eine Schleifbearbeitung der Außenoberfläche der Welle und/oder der Innenoberfläche des Nabenkörpers zu verzichten. Eine über den Umfang variierende Wandstärke der Welle führt in vorteilhafter Weise zu einer besonders homogenen Verteilung der mechanischen Spannungen und damit zu einer größeren radialen Flexibilität beziehungsweise Federwirkung. Hierdurch können temperatur- und drehzahlbedingte radiale Aufweitungen der Nabe bis zu hohen Drehzahlen kompensiert werden. Dabei bewirken die vergleichsweise geringen mechanischen Spannungen eine geringere Belastung der Welle beziehungsweise Nabe, so dass diese eine lange Lebensdauer aufweisen.

Neben der erfindungsgemäß gebildeten kraftschlüssigen Verbindung zwischen Wellenrohr und Nabenkörper können optional auch form- und/oder stoffschlüssige Verbindungen vorgesehen sein, die vorzugsweise im Bereich der Stützabschnitte angeordnet sein können.

Der Nabenkörper wird vorzugsweise auf die Hohlwelle aufgepresst, um die kraftschlüssige Verbindung zwischen Welle und Nabe herzustellen. Insbesondere kann der Nabenkörper im Längspressverband oder im Querpressverband mit der Hohlwelle verbunden sein. Zur Herstellung eines Längspressverbands wird die Nabe unter hoher Axialkraft auf den Wellensitz gepresst. Zur Herstellung eines Querpressverbands wird vor der Montage die Nabe erwärmt und/oder die Welle gekühlt. Dadurch weitet sich die Nabe beziehungsweise schrumpft die Welle, so dass ein Fügen beider Teile mit verringertem Krafteinfluss ermöglicht wird. Beim anschließenden Temperaturausgleich stellt sich die Pressung ein, wobei die Oberflächenrauheit weitestgehend erhalten bleibt. Hierdurch ergibt sich ein festerer Sitz als bei einem Längspressverband. Die Hohlwelle kann vor der Montage eine Oberflächenrauigkeit von mindestens 0,1 Rz und/oder bis zu 1000 Rz, insbesondere von 1,0 Rz bis 100 Rz aufweisen. Gleiches gilt auch für die Oberflächenrauigkeit des Nabenkörpers, die mindestens 0,1 Rz und/oder bis zu 1000 Rz, insbesondere von 1,0 Rz bis 100 Rz betragen kann.

Die Wandung der Hohlwelle hat vorzugsweise eine variable Dicke über den Umfang, wobei eine konstante Wandstärke über den Umfang prinzipiell auch möglich ist. Durch entsprechende Ausgestaltung der Wandstärke über den Umfang können die zwischen der Welle und der Nabe wirksamen Spannungen gemäß den technischen Anforderungen eingestellt werden. Dabei sind die Spannungen bei einer Wellenanordnung, deren Welle eine variable Wandstärke aufweist, deutlich geringer als bei einer vergleichbaren Wellenanordnung, deren Welle eine konstante Wandstärke hat (bei gleichem Werkstoff mit identischer Festigkeit).

Nach einer Ausführungsform ist die Wandung der Hohlwelle so gestaltet, dass ein kleinster Innenradius der Stützabschnitte größer ist, als ein kleinster Innenradius der Federabschnitte. Mit anderen Worten bilden die Stützabschnitte absolute Maxima der Wandung, während die dazwischenliegenden Federabschnitte absolute Minima bilden. Sowohl die Außenfläche als auch die Innenfläche der Hohlwelle haben im Querschnitt betrachtet eine insbesondere polygonale Form. Dies gilt für den unmontierten und/oder für den montierten Zustand der Hohlwelle.

Technisch gesehen entsprechen die Federungsabschnitte jeweils zu beiden Seiten (in jeder Umfangsrichtung) einem mit einer Einzellast belasteten Biegebalken. Durch entsprechende Ausgestaltung der geometrischen Verhältnisse der Federungsabschnitte, wie Dicke, Krümmung und/oder Umfangslänge, kann das Federungsverhalten und damit die sich hieraus ergebende Federkennlinie der Hohlwelle und damit wiederum der radial-elastische Pressverbund zwischen Welle und Nabe nach Bedarf eingestellt werden. Dabei kann die Federkennlinie progressiv, das heißt mit zunehmendem Federweg steigender Federkraft, degressiv, das heißt mit zunehmendem Federweg abnehmender Federkraft, oder linear, das heißt mit konstanter Federkraft über dem Federweg ausgelegt beziehungsweise eingestellt werden. Die Federungsabschnitte können eine konvexe Innenfläche, eine konkave Innenfläche, eine gerade Innenfläche und/oder Kombinationen daraus aufweisen.

Bei Ausgestaltung der Hohlwelle mit einer dickeren Wandung und/oder kürzeren freien Biegeläge des jeweiligen Federungsabschnitts zwischen zwei in Umfangsrichtung benachbarten Stützabschnitten ergibt sich eine höhere Steifigkeit mit höheren radialen Vorspannkräften. Bei Ausgestaltung der Hohlwelle mit einer dünneren Wandung und/oder längeren freien Biegeläge des jeweiligen Federungsabschnitts zwischen zwei in Umfangsrichtung benachbarten Stützabschnitten ergibt sich eine geringere Steifigkeit mit geringeren radialen Vorspannkräften.

Auch die Anzahl und die Erstreckung der Stützabschnitte beziehungsweise der Federungsabschnitte hat eine Auswirkung auf das Federungsverhalten und damit auf den Pressverbund zwischen Welle und Nabe. Vorzugsweise hat die Hohlwelle drei Stützabschnitte und drei Federabschnitte, die abwechselnd über den Umfang angeordnet sind. Hieraus ergibt sich eine gute Zentrierung und gegenseitige Abstützung von Welle und Nabe. Es versteht sich jedoch, dass auch andere Zahlen möglich sind, wie zwei, vier, fünf, sechs oder mehr Stützabschnitte beziehungsweise Federungsabschnitte, wobei eine ungerade Anzahl aus Gründen der Zentrierung bevorzugt ist. Die Stützabschnitte beziehungsweise Federungsabschnitte sind vorzugsweise regelmäßig über den Umfang verteilt angeordnet, so dass entsprechend eine gleichmäßige kraftschlüssige Verbindung über den Umfang erzeugt wird.

Nach einer möglichen Ausführungsform können sich die Stützabschnitte im Querschnitt betrachtet jeweils über einen Winkelbereich von mindestens 5°, vorzugsweise mindestens 30°erstrecken. Alternativ oder ergänzend können sich die Stützabschnitte im Querschnitt betrachtet jeweils über einen maximalen Winkelbereich von bis zu 115°, vorzugsweise bis zu 90° erstrecken.

Die Federabschnitte können sich im Querschnitt betrachtet jeweils über einen Winkelbereich von mindestens 5°, vorzugsweise mindestens 30° erstrecken. Alternativ oder ergänzend können sich die Federabschnitte im Querschnitt betrachtet jeweils über einen maximalen Winkelbereich von bis zu 115°, vorzugsweise bis zu 90° erstrecken.

Nach möglichen Ausgestaltung können die Federabschnitte so gestaltet sein, dass diese in montiertem Zustand des Nabenkörpers im Wesentlichen Druckspannungen unterliegen. Hierfür kann durch eine gezielte Einstellung der geometrischen Form der Welle mit variierender Wandstärke die Belastung in der Welle so eingestellt werden, dass für das Versagen besonders schädliche Zugspannungen infolge einer tangentialen Biegung, durch Druckspannungen infolge einer Normalspannung in tangentialer Richtung kompensiert werden können. Insbesondere kann die Wandung für eine besonders günstige Spannungsverteilung in den Stützabschnitten eine geringere Dicke aufweisen, als in den Federabschnitten. Dabei kann die maximale Dicke der Federabschnitte beispielsweise mindestens 1,1-fach, insbesondere mindestens 1,2-fach, vorzugsweise mindestens 1,5-fach so groß sein, wie die minimale Dicke der Stützabschnitte. Nach einer möglichen Weiterbildung kann die Wandungsdicke innerhalb der Stützabschnitte in Umfangsrichtung variabel gestaltet sein. Dabei ist die Wandungsdicke in einem Zentralbereich des jeweiligen Stützabschnitts vorzugsweise dünner, als in den Endbereichen des Stützbereichs (in jeder Umfangsrichtung), die in den jeweils benachbarten Federungsabschnitt übergehen.

Die Stützabschnitte haben vorzugsweise eine an die Innenkontur des Nabenkörpers angepasste Außenkontur, die insbesondere kreiszylindrisch ist. So wird über die gesamte Umfangslänge der Stützabschnitte eine flächige Anlage und damit Reibkontakt zum Nabenkörper bereitgestellt. Es ist auch möglich, dass die Außenkontur der Hohlwelle in unmontiertem Zustand in einem Umfangsbereich der Stützabschnitte absolute Maxima aufweist und, dass sich die Stützabschnitte im Fügeprozess ausgehend von den absoluten Maxima in beide Umfangsrichtungen flächig an die kreiszylindrische Innenkontur des Nabenkörpers anlegen. In montiertem Zustand hat die Innenumfangsfläche der Hohlwelle in den Umfangsbereichen der Federabschnitte einen kleineren Abstand zur Drehachse, als in den Umfangsbereichen der Stützabschnitte.

Die Federabschnitte können jeweils ausgehend von den daran in Umfangsrichtung angrenzenden Stützabschnitten einen stetig zunehmenden radialen Abstand zu einer gedachten Kreislinie mit Radius der Außenumfangsfläche der Stützabschnitte beziehungsweise der Innenumfangsfläche des Nabenkörpers aufweisen.

Nach einer bevorzugten Ausführungsform ist die Hohlwelle so ausgelegt, dass für den radialen Federweg (s3) der Hohlwelle gilt:

$$s3 = (R3max - R3min) > \frac{R_{p0,2} * A}{E * \pi * D_{3a}} * \left(1 - \frac{\pi * D_{3a}^2}{2 * A} - \mu\right)$$

wobei R3max der maximale Radius der Welle in unmontiertem Zustand, R3min der maximale Radius der Welle in maximal radial-elastisch eingefedertem Zustand, D3a das Doppelte des maximalen Radius (R3max) der Welle in unmontiertem Zustand, E das E-Modul der Welle, A die Querschnittsfläche der Welle, $\mu$ die Querkontraktionszahl der Welle und Rp0,2 die Streckgrenze des Werkstoffs der Welle sind. Der Federweg der Hohlwelle kann beispielsweise auf mehr als das 1,1-fache, insbesondere auch mehr als das 1,2-fache des angegebenen formelmäßigen Terms eingestellt sein. Dabei gilt, dass je größer der Federweg ist, desto größer ist der erreichbare Geometrieausleich zur Kompensation von Maß- und Lageabweichungen sowie thermisch- und/oder fliehkraftbedingten Verformungen zwischen Welle und Nabe.

Alternativ oder in Ergänzung kann die Hohlwelle so ausgelegt sein, dass für die Federrate (k3) der Hohlwelle gilt:

$$k3 = \frac{F_{rad}}{U_{34}} < \pi * l_{34} * E * \left( 1 - \frac{\pi * D_{3a}^2}{2 * A} - \mu \right)^{-1}$$

wobei Frad die wirksamen Radialkräfte zwischen Welle und Nabenkörper in montiertem Zustand, U34 das wirksame Übermaß zwischen dem größten Außendurchmesser (D3a) der Welle und dem kleinsten Innendurchmesser (D4i) des Nabenkörpers in unmontiertem Zustand, E das E-Modul der Welle, $l_{34}$ die Länge der Fügefläche zwischen Welle und Nabenkörper, D3a das Doppelte des maximalen Radius (R3max) der Welle in unmontiertem Zustand und μ die Querkontraktionszahl der Welle sind. Die Federrate kann beispielsweise weniger als das 0,9-fache, insbesondere auch weniger als das 0,8-fache des angegebenen formelmäßigen Terms betragen. Dabei führt eine geringere Federrate zu entsprechend geringeren Belastungen im Kontaktbereich zwischen Welle und Nabe.

Die Wellenanordnung kann prinzipiell für beliebige Anwendungen, bei denen Drehmomente zwischen einem Nabenkörper und einem Wellenkörper zu übertragen sind, verwendet werden. Beispielsweise kann die Hohlwelle als Motorwelle für einen Elektromotor gestaltet sein, wobei der Nabenkörper in diesem Fall ein Rotorblechpaket aus mehreren Rotorblechen aufweisen kann. Dabei ist die Wellenanordnung aufgrund der radialen Federwirkung der Hohlwelle imstande, auch bei großen Drehzahlen von beispielsweise 1.500 U/min und mehr eine sichere kraftschlüssige Verbindung zur Nabe zu gewährleisten.

Die Hohlwelle kann ein Wellenrohr sowie zwei an den Enden daran angeschlossene Zapfenelemente aufweisen. Zumindest eines der Zapfenelemente kann einen Anschlussabschnitt zum Verbinden mit einem Endabschnitt des Wellenrohres aufweisen, wobei die Umfangskontur des Anschlussabschnitts vorzugsweise an die Gegenkontur des Wellenrohres angepasst ist, so dass das Zapfenelement und das Wellenrohr formschlüssig ineinandergreifen. Der Anschlussabschnitt kann in das Wellenrohr eingesteckt sein, wobei in diesem Fall die Umfangskontur eine Außenkontur ist, die an die gegengleiche Innenkontur des Wellenrohres angepasst ist. Alternativ kann die Verbindung auch invers ausgebildet sein, wobei die Innenkontur des Anschlussabschnitts formschlüssig in die Außenkontur des Wellenrohres eingreift.

Bevorzugte Ausführungsformen werden nachstehend anhand der Zeichnungsfiguren erläutert. Hierin zeigt

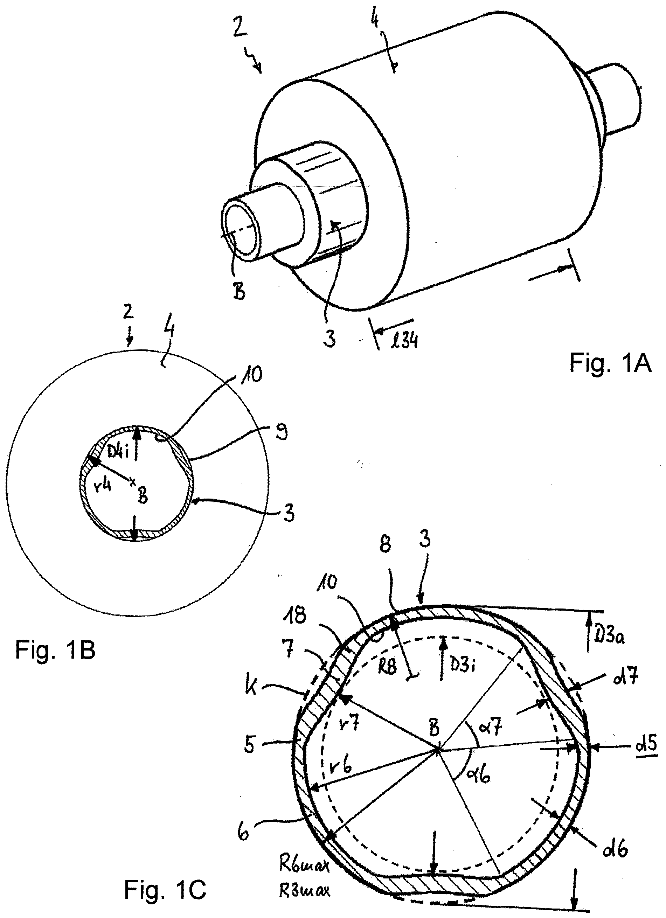

Figur 1A    eine erfindungsgemäße Wellenanordnung in einer ersten Ausführungsform in dreidimensionaler Ansicht;

Figur 1B    die Wellenanordnung aus Figur 1A im Querschnitt;

Figur 1C    die Hohlwelle der Wellenanordnung aus Figur 1A als Einzelheit im Querschnitt

Figur 1 0    die Hohlwelle aus Figur 1A und 1C in dreidimensionaler Ansicht;

Figur 1E    die Hohlwelle aus Figur 1D in perspektivischer Explosionsdarstellung;

Figur 1F    die Wellenanordnung aus Figur 1D in perspektivischer Darstellung während der Montage;

Figur 2    eine grafische Darstellung des übertragbaren maximalen Drehmoments über der Drehzahl von einer erfindungsgemäßen Wellenanordnung mit variabler Wanddicke über den Umfang, verglichen mit einer Wellenanordnung gemäß Stand der Technik beziehungsweise mit konstanter Wanddicke über dem Umfang;

Figur 3A    eine erfindungsgemäße Wellenanordnung in einer leicht abgewandelten Ausführungsform im Querschnitt;

Figur 3B    die Hohlwelle der Wellenanordnung aus Figur 3A in vergrößerter Darstellung mit weiteren Einzelheiten;

Figur 4A    eine erfindungsgemäße Wellenanordnung in einer weiteren Ausführungsform im Querschnitt;

Figur 4B    die Hohlwelle der Wellenanordnung aus Figur 4A in perspektivischer Darstellung;

Figur 4C    die Hohlwelle aus Figur 4A in perspektivischer Explosionsdarstellung;

Figur 5    eine erfindungsgemäße Wellenanordnung in einer weiteren Ausführungsform im Querschnitt;

Figur 6    eine erfindungsgemäße Wellenanordnung in einer weiteren Ausführungsform im Querschnitt;

Figur 7    eine erfindungsgemäße Wellenanordnung in einer weiteren Ausführungsform im Querschnitt; und

Figur 8    eine erfindungsgemäße Wellenanordnung in einer weiteren Ausführungsform im Querschnitt.

Die Figuren 1A bis 1E, die nachstehend gemeinsam beschrieben werden, zeigen eine erfindungsgemäße Wellenanordnung 2 in einer ersten Ausführungsform. Die Wellenanordnung 2 umfasst eine Hohlwelle 3 und einen Nabenkörper 4, die miteinander kraftschlüssig verbunden sind. Die kraftschlüssige Verbindung der beiden Bauteile (3, 4) erfolgt insbesondere mittels Pressverband, wobei ein Längspressverband oder Querpressverband verwendet werden kann.

Die Hohlwelle 3 hat im Querschnitt betrachtet eine umlaufend geschlossene Wandung 5 mit mehreren über den Umfang verteilten Stützabschnitten 6 und hierzu in Umfangsrichtung abwechselnden Federabschnitten 7. Die Federabschnitte 7 sind in montiertem Zustand des Nabenkörpers 4 elastisch vorgespannt, so dass sie die in Umfangsrichtung dazwischen liegenden Stützabschnitte 6 in Umfangsrichtung und in radiale Richtung beaufschlagen. Hierdurch sind die Stützabschnitte 6 unter radialer Vorspannkraft mit dem Nabenkörper 4 in kraftschlüssigem Anlagekontakt, so dass ein Drehmoment zwischen Welle und Nabe übertragbar ist.

Vorzugsweise sind die Federungsabschnitte 7 und die Stützabschnitte 6 jeweils untereinander gleich gestaltet und insbesondere jeweils symmetrisch. Die Federungsabschnitte 7 bilden jeweils ausgehend von einem Zentralbereich, der mittig zwischen zwei in Umfangsrichtung benachbarten Stützabschnitten 6 liegt, in jeder Umfangsrichtung einen mit einer Einzellast belasteten Biegebalken. Durch entsprechende Ausgestaltung der geometrischen Verhältnisse der Federungsabschnitte 7, wie Dicke, Krümmung und/oder Umfangslänge, kann das Federungsverhalten und damit der Pressverband zwischen Welle 3 und Nabe 4 gemäß den technischen Anforderungen hinsichtlich Drehzahl und Drehmoment eingestellt werden.

Die Wandung 5 der Hohlwelle ist insbesondere so gestaltet, dass die Innenumfangsfläche 10 der Hohlwelle 3 im Querschnitt betrachtet in einem Umfangsbereich der Stützabschnitte 6 einen maximalen Abstand zur Drehachse B und in einem Umfangsbereich der Federabschnitte 7 einen minimalen Abstand zur Drehachse B aufweist. Dabei kann ein kleinster Innenradius $r6$ der Stützabschnitte 6 größer sein, als ein kleinster Innenradius $r7$ der Federabschnitte 7. Das heißt, die Stützabschnitte 6 bilden absolute Maxima der Wandung 5, während die dazwischenliegenden Federabschnitte 7 absolute Minima bilden.

Die Stützabschnitte 6 sind im Querschnitt betrachtet mit einer Stützfläche 8 über eine gewisse Umfangserstreckung mit der Innenfläche 9 des Nabenkörpers 4 in Anlagekontakt. Dabei gilt allgemein, dass die Anzahl und die Erstreckung der Stützabschnitte 6 beziehungsweise der Federungsabschnitte 7 das Federungsverhalten und damit die Vorspannkraft des Pressverbands zwischen Welle 3 und Nabe 4 beeinflussen. Die Stützabschnitte 6 haben eine an die Innenkontur 9 des Nabenkörpers 4 angepasste Außenkontur 8, wobei die Innenkontur 9 des Nabenkörpers 4 vorliegend kreiszylindrisch ist.

Die Hohlwelle 3 ist so gestaltet, dass die Stützabschnitte 6 in unmontiertem Zustand der Anordnung einen maximalen Außenradius $R6max$ aufweisen, der größer ist, als der Innenradius $r4$ der Nabe 4. Als maximaler Außenradius $R6max$ soll dabei der Radius verstanden werden, der sich von der Drehachse B zu einem hiervon radial maximal entfernten Punkt auf der Oberfläche der Stützabschnitte 6 erstreckt. Der maximale Außenradius der Welle3, der sich aus dem maximalen Außenradius $R6max$ der Stützabschnitte 6 ergibt, wird mit $R3max$ bezeichnet. Die Außenkontur der Stützabschnitte 6 kann einen vom Maximalradius $R6max$ abweichenden äußeren Radius $R8$ aufweisen, der in unmontiertem Zustand der Nabe insbesondere auch geringfügig kleiner sein kann, als der Innenradius $r4$ der Nabe 4. Die Federabschnitte 7 können jeweils ausgehend von den daran in Umfangsrichtung angrenzenden Stützabschnitten 6 einen stetig zunehmenden radialen Abstand zu einer gedachten Kreislinie K mit Radius $R6max$ durch das Maximum der Stützabschnitte beziehungsweise zur kreiszylindrischen Innenfläche 9 mit Innenradius $r4$ der Nabe 4 aufweisen.

Es ist insbesondere in den Figuren 1B und 1C erkennbar, dass die Hohlwelle 3 in der vorliegenden Ausführungsform drei Stützabschnitte 6 und drei Federabschnitte 7 aufweist, die abwechselnd und regelmäßig über den Umfang verteilt sind. Hieraus ergibt sich eine gute Zentrierung und gegenseitige Abstützung von Welle und Nabe. Durch die Ausgestaltung mit drei Stütz- und drei Federabschnitten ergibt sich eine jeweilige Teilung von 120° um die Drehachse B. Die Stützabschnitte 6 erstrecken sich im Querschnitt betrachtet jeweils über einen Winkelbereich $\alpha6$ von insbesondere etwa 60° bis 90° um die Drehachse, beziehungsweise sind über den genannten Winkelbereich mit der Innenfläche 9 der Nabe 4 in Anlagekontakt. Entsprechend erstrecken sich die Federabschnitte 7, die in montiertem Zustand der Nabe 4 gegenüber dieser berührungslos sind, im Querschnitt betrachtet jeweils über einen Winkelbereich $\alpha7$ von etwa 30° bis 60° in Umfangsrichtung. Es versteht sich jedoch, dass die Welle 3 auch eine von drei abweichende Zahl an Anlage- und Federabschnitten 6, 7 aufweisen kann, womit entsprechend andere Umfangslängen möglich sind.

Es ist insbesondere in Figur 1C erkennbar, dass die Wandung 5 der Hohlwelle 3 eine über den Umfang variable Dicke d5 aufweist. Dabei ist eine mittlere und/oder kleinste Wanddicke d6 in den Stützabschnitten 6 geringer, als eine mittlere und/oder kleinste Wanddicke d7 in den Federabschnitten 7. Bei der vorliegenden Ausführungsform ist die Wanddicke d7 der Federabschnitte 7 in Umfangsrichtung im Wesentlichen konstant, wobei auch ein variabler Verlauf möglich ist. Auch die Wanddicke d6 der Stützabschnitte 6 ist in Umfangsrichtung im Wesentlichen konstant. Zwischen den Stützabschnitten 6 und den Federabschnitten 7 ist jeweils ein Übergangsabschnitt 18 mit in Umfangsrichtung variabler Wanddicke gebildet, wobei die Wanddicke sich in diesem Übergangsabschnitt 18 insbesondere stetig ändert. Die größte und/oder mittlere Wanddicke d7 der Federabschnitte 7 beträgt vorzugsweise mindestens das 1,5-fache der kleinsten Wanddicke d6 der Stützabschnitte 6.

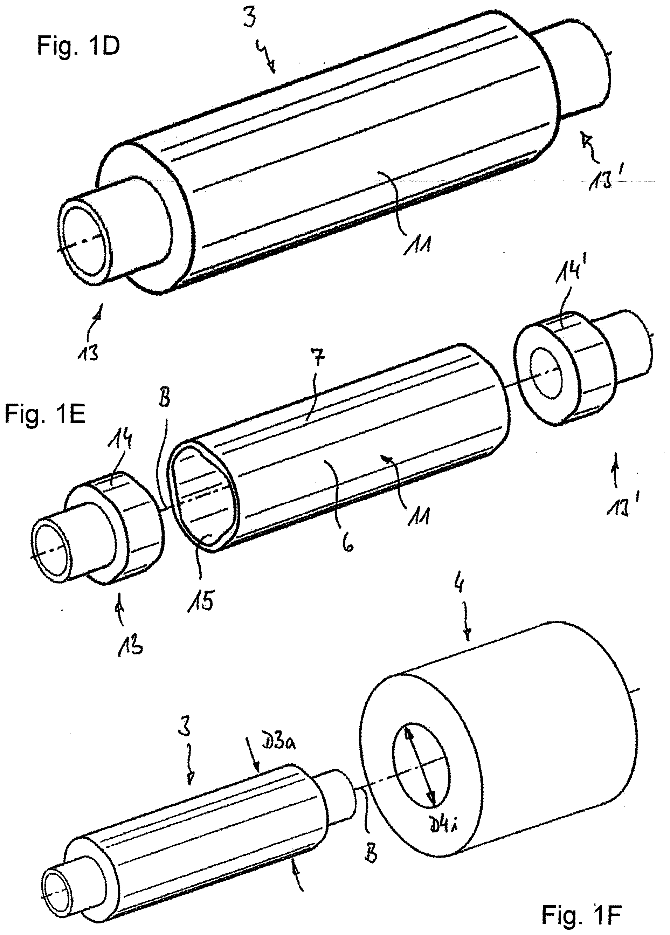

Wie insbesondere aus Figur 1E hervorgeht, umfasst die Hohlwelle 3 ein Wellenrohr 11 sowie zwei an den Enden 12, 12' daran angeschlossene Zapfenelemente 13, 13'. Die Zapfenelemente 13, 13' haben jeweils einen Anschlussabschnitt 14, 14', dessen Außenkontur an die Innenkontur 15 des Wellenrohres 11 angepasst ist. Die Zapfenelemente 13, 13' werden in die Enden des Wellenrohrs 11 eingepresst und bilden mit diesem eine formschlüssige und kraftschlüssige Verbindung, wobei andere Verbindungsarten, wie eine stoffschlüssige Verbindung (Schweißen) ebenso möglich sind. Das Wellenrohr 11 kann mit den darin vorgesehenen Federabschnitten 7 beispielsweise durch Ziehen, Innenhochdruckumformen oder radiales Hämmern beziehungsweise Rundkneten hergestellt werden. Beim Ziehen wird ein rundes Eingangsrohr mit konstanter Wandstärke durch ein Ziehwerkzeug gezogen, das die Querschnittskontur der Welle 3 einformt und gegebenenfalls eine über den Umfang variierende Wandstärke einstellt. Durch gezielte Einstellung des Zieh- und Glühprozesses kann die Festigkeit der Welle 3 so eingestellt werden, dass im Anschluss kein Härten notwendig ist.

Die Oberflächenrauigkeit der Hohlwelle kann vor der Montage zwischen 0,1 Rz und 1000 Rz liegen, insbesondere zwischen 1,0 Rz und 100 Rz. Gleiches gilt auch für die Oberflächenrauigkeit des Nabenkörpers.

Die Hohlwelle kann so ausgelegt werden, dass ihr radialer Federweg s3 größer ist als:

$$\frac{R_{p0,2} * A}{E * \pi * D_{3a}} * \left(1 - \frac{\pi * D_{3a}^2}{2 * A} - \mu\right)$$

und/oder, dass ihre Federrate k3 kleiner ist als:

$$\pi * l_{34} * E * \left(1 - \frac{\pi * D_{3a}^2}{2 * A} - \mu\right)^{-1}$$

Dabei gilt, dass ein möglicher Geometrieausgleich zwischen Welle 3 und Nabe 4 mit zunehmendem Federweg s3 zunimmt und, dass die Belastungen im Kontaktbereich zwischen Welle und Nabe mit abnehmender Federrate k3 entsprechend abnehmen.

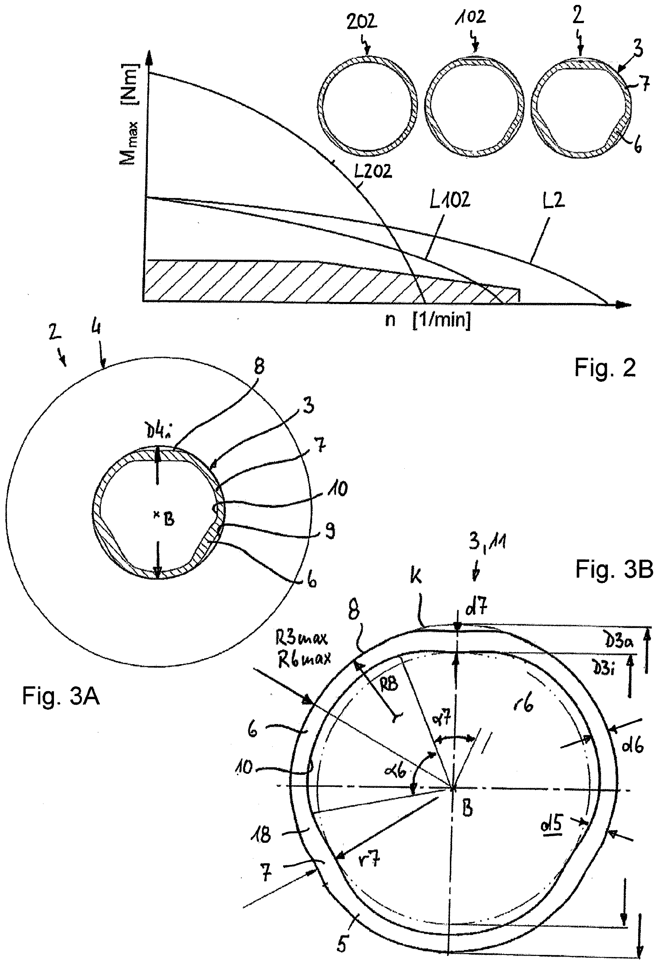

In Figur 2 ist das mittels der erfindungsgemäßen Wellenanordnung 2 übertragbare maximale Drehmoment über der Drehzahl (Linie L2), verglichen mit einer Wellenanordnung 202 mit runder Hohlwelle mit konstanter Wanddicke (Linie L202), beziehungsweise einer Wellenanordnung 102 mit polygonaler Hohlwelle mit konstanter Wanddicke (Linie L102), grafisch dargestellt.

Es ist erkennbar, dass bei einer Wellenanordnung 202 mit runder Hohlwelle mit konstanter Wanddicke das maximal übertragbare Drehmoment Mmax mit zunehmender Drehzahl n stark abnimmt (Kurve 202). Verglichen hiermit, fällt bei einer Wellenanordnung 102 mit polygonaler Hohlwelle mit konstanter Wanddicke die Kurve L102 für das maximal übertragbare Drehmoment Mmax flacher ab. Damit lassen sich auch bei höheren Drehzahlen noch hohe Drehmomente übertragen. Die besten Ergebnisse erzielt die erfindungsgemäße Wellenanordnung 2, deren Hohlwelle eine variable Wanddicke über dem Umfang aufweist. Es ist anhand der zugehörigen Kennlinie L2 erkennbar, dass diese in Richtung höherer Drehzahlen n wesentlich flacher abfällt. Hieraus resultiert in vorteilhafter Weise eine nochmals höhere Drehzahlkapazität zur Übertragung der erforderlichen hohen Drehmomente. Dies wird dadurch erreicht, dass die umfangsverteilten Federabschnitte 7 Federkräfte auf die jeweils dazwischenliegenden Stützabschnitte 6 ausüben, die somit gegen die Kontaktfläche des Nabenkörpers 4 angepresst werden. Dabei unterstützt die über den Umfang variable Wanddicke der Welle eine homogene Spannungsverteilung, was zu einer besonders starken radialen Federwirkung führt. Somit erfolgt ein besonders großer Geometrieausgleich zur Kompensation von Maß- und Lageabweichungen sowie thermisch- und fliehkraftbedingten Verformungen zwischen Welle 3 und Nabe 4, so dass auch bei hohen Drehzahlen eine sichere kraftschlüssige Verbindung zwischen den Bauteilen (3, 4) erhalten bleibt.

Die Figuren 3A und 3B, die nachstehend gemeinsam beschrieben werden, zeigen eine erfindungsgemäße Wellenanordnung 2 in einer leicht abgewandelten Ausführungsform. Diese entspricht weitestgehend der Ausführungsform gemäß den Figuren 1 und 2, so dass hinsichtlich der Gemeinsamkeiten auf die obige Beschreibung Bezug genommen wird. Dabei sind gleiche beziehungsweise einander entsprechende Einzelheiten mit gleichen Bezugzeichen versehen, wie in Figur 1.

Ein Unterschied liegt in der Form der Federabschnitte 7, welche eine etwas geringere Umfangserstreckung $\alpha 7$ aufweisen und weniger stark nach innen eingeformt sind. Entsprechend haben die Stützabschnitte 6 eine etwas größere Umfangserstreckung $\alpha 6$, als bei der obigen Ausführungsform. Hierdurch ergibt sich vorliegend eine größere Steifigkeit der Hohlwelle 3, was entsprechend zu größeren Kräften im Pressverband zwischen Welle 3 und Nabenkörper 4 führt.

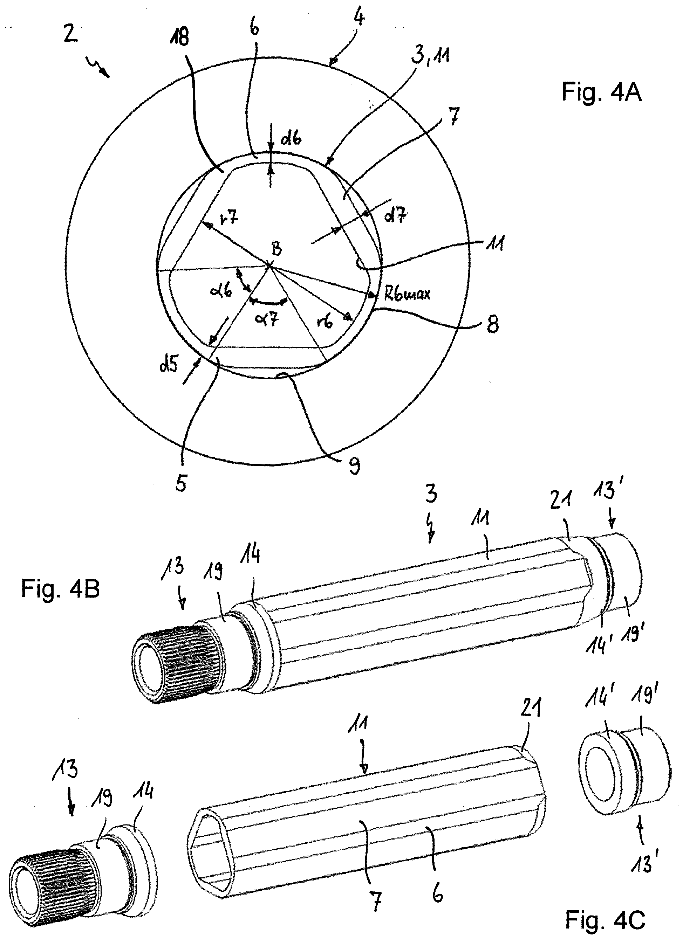

Die Figuren 4A bis 4C, welche nachstehend gemeinsam beschrieben werden, zeigen eine erfindungsgemäße Wellenanordnung 2 in einer weiteren Ausführungsform. Diese entspricht weitgehend den Ausführungsformen gemäß den Figuren 1 bis 3, so dass hinsichtlich der Gemeinsamkeiten auf die obige Beschreibung Bezug genommen wird. Dabei sind gleiche beziehungsweise einander entsprechende Einzelheiten mit gleichen Bezugszeichen versehen, wie in den Figuren 1 bis 3.

Bei der vorliegenden Ausführungsform gemäß Figur 4 hat die Wandung 5 der Hohlwelle 3 eine über den Umfang variable Dicke d5. Dabei ist eine mittlere und/oder kleinste Wanddicke d6 in den Stützabschnitten 6 geringer, als eine mittlere und/oder kleinste Wanddicke d7 in den Federabschnitten 7. Bei der vorliegenden Ausführungsform sind die Federabschnitte 7 gerade gestaltet. Die Wanddicke der Federabschnitte 7 ist in Umfangsrichtung im Wesentlichen konstant, wobei auch ein variabler Verlauf möglich ist. Die Wanddicke der Stützabschnitte 6 ist in den an die Federabschnitte 7 anschließenden Endbereichen in Umfangsrichtung variabel, insbesondere mit stetigen Übergängen. Dabei ist im Querschnitt betrachtet die Wanddicke d6 in einem Zentralbereich des jeweiligen Stützabschnitts 6 dünner, als in den Endbereichen des Stützabschnitts (in jeder Umfangsrichtung), die in den jeweils benachbarten Federungsabschnitt 7 übergehen. Die größte und/oder mittlere Wanddicke d7 der Federabschnitte 7 beträgt mindestens das 1,5-fache der kleinsten Wanddicke d6 der Stützabschnitte 6. Die Umfangserstreckung der Federabschnitte 7, die in montiertem Zustand der Nabe 4 gegenüber dieser berührungslos sind, liegt bei dieser Ausführungsform vorzugsweise zwischen 30° und 60°. Die Umfangserstreckung der Stützabschnitte 6, die in montiertem Zustand mit der Nabe 4 in Anlagekontakt sind, liegt entsprechend zwischen 60° und 90°.

Wie insbesondere aus Figur 4C hervorgeht, umfasst die Hohlwelle 3 ein Wellenrohr 11 sowie zwei an den Enden 12, 12' daran angeschlossene Zapfenelemente 13, 13'. Die Zapfenelemente 13, 13' haben jeweils einen Anschlussabschnitt 14, 14' zum Verbinden mit dem Wellenrohr 11 sowie einen Lagerabschnitt 19, 19' zur drehbaren Lagerung der Welle in einem ortsfesten Bauteil. Die Anschlussabschnitte 14, 14' sind flanschartig gestaltet und werden stirnseitig an ein zugehöriges Stirnende des Wellenrohres 11 angesetzt und mit diesem fest verbunden. Die Verbindung kann insbesondere stoffschlüssig mittels Schweißen erfolgen. Eines der Zapfenelemente 13 hat eine Wellenverzahnung zur drehfesten Verbindung mit einem Anschlussbauteil (nicht dargestellt), wobei es sich versteht, dass je nach Anwendungsfall auch das andere Zapfenelement 13' entsprechend mit Wellenverzahnung gestaltet sein kann. Eine weitere Besonderheit der vorliegenden Ausführungsform ist, dass die Hohlwelle 3 einen Endabschnitt mit einer konischen Außenfläche 21 aufweist. Die konische Außenfläche 21 ermöglicht eine einfache Montage des Nabenkörpers 4, der zum Verbinden axial auf die Hohlwelle 3 aufgepresst wird.

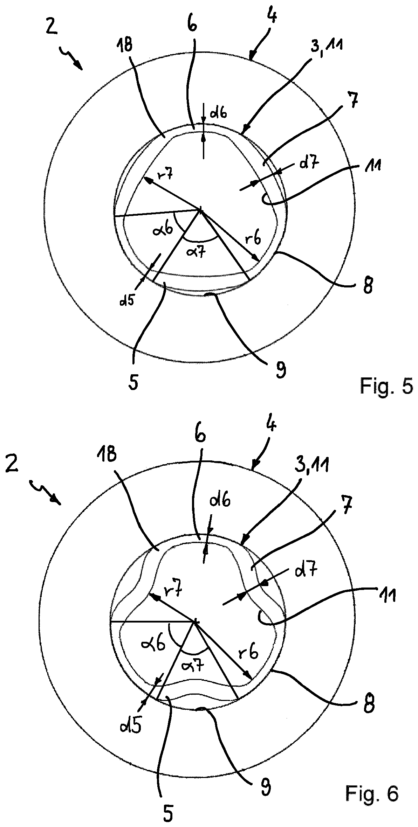

In Figur 5 ist eine erfindungsgemäße Wellenanordnung 2 in einer weiteren Ausführungsform gezeigt. Diese entspricht weitestgehend der Ausführungsform gemäß Figur 4, auf deren Beschreibung insofern Bezug genommen wird. Dabei sind gleiche beziehungsweise einander entsprechende Einzelheiten mit gleichen Bezugszeichen versehen.

Bei der vorliegenden Ausführungsform gemäß Figur 5 sind die Federabschnitte 7 mit einer konkaven Innenfläche 11 gestaltet, beziehungsweise sind zwischen den in Umfangsrichtung anschließenden Übergangsabschnitten 18 insgesamt konkav gekrümmt. Dementsprechend ist die Außenfläche konvex. Ferner sind die Federabschnitte 7 bei der vorliegenden Ausführungsform in Umfangsrichtung länger ausgebildet als die Stützabschnitte 6, ohne hierauf eingeschränkt zu sein, und haben insbesondere jeweils eine Umfangserstreckung $\alpha 7$ von mehr als 60°. Entsprechend ist die Umfangserstreckung $\alpha 6$ der Stützabschnitte 8 kleiner und beträgt jeweils weniger als 60°, bei einer Ausführung mit jeweils drei Stütz- und Federabschnitten.

In Figur 6 ist eine erfindungsgemäße Wellenanordnung 2 in einer weiteren Ausführungsform gezeigt. Diese entspricht weitestgehend der Ausführungsform gemäß Figur 4, beziehungsweise Figur 5, auf deren Beschreibung insofern Bezug genommen wird. Dabei sind gleiche beziehungsweise einander entsprechende Einzelheiten mit gleichen Bezugszeichen versehen.

Bei der vorliegenden Ausführungsform gemäß Figur 6 sind die Federabschnitte 7 mit einer konvexen Innenfläche 11 gestaltet, beziehungsweise sind zwischen den in Umfangsrichtung beidseitig anschließenden Übergangsabschnitten 18 insgesamt konvex gekrümmt. Dementsprechend sind die Außenflächen der Federabschnitte 7 konkav. Ferner sind die Federabschnitte 7 bei der vorliegenden Ausführungsform in Umfangsrichtung kürzer ausgebildet als die Stützabschnitte 6, ohne hierauf eingeschränkt zu sein, und haben insbesondere jeweils eine Umfangserstreckung $\alpha 7$ von weniger als 60°. Entsprechend ist die Umfangserstreckung $\alpha 6$ der Stützabschnitte 8 größer als 60°, bei einer Ausführung mit jeweils drei Stütz- und Federabschnitten.

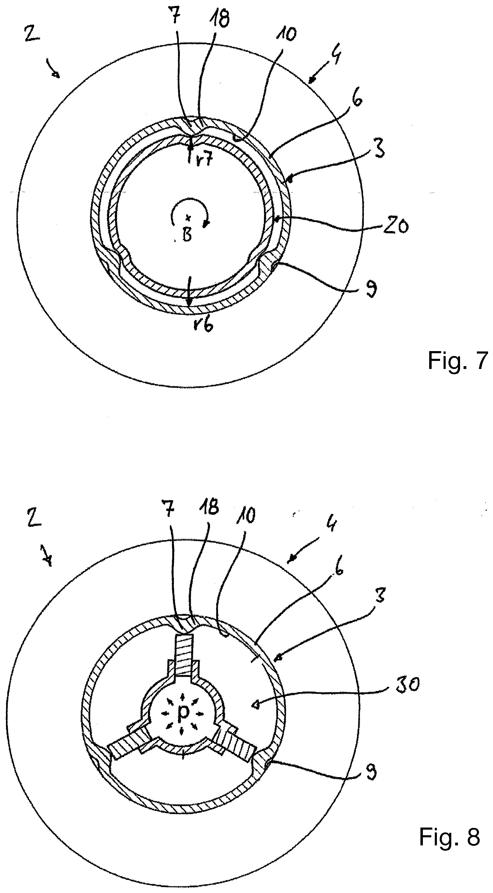

In Figur 7 ist eine erfindungsgemäße Wellenanordnung 2 in einer weiteren Ausführungsform gezeigt. Diese entspricht weitestgehend der Ausführungsform gemäß Figur 1, auf deren Beschreibung insofern Bezug genommen wird. Dabei sind gleiche Einzelheiten mit gleichen Bezugszeichen versehen.

Bei der vorliegenden Ausführungsform gemäß Figur 7 sind die Federabschnitte 7 in Umfangsrichtung relativ kurz ausgebildet und haben insbesondere jeweils eine Umfangserstreckung $\alpha 7$ von weniger als 20°. Entsprechend ist die Umfangserstreckung $\alpha 6$ der Stützabschnitte 8 größer und beträgt vorliegend jeweils mehr als 80°. Es ist ferner ein rohrförmiges Bauteil 20 vorgesehen, das in das Wellenrohr 11 eingeführt wird und durch relatives Verdrehen eine elastische oder elastisch-plastische Verformung der Federabschnitte 7 bewirkt. Das Bauteil 20 verbleibt nach der Verformung der Federabschnitte 7 in dem Wellenrohr 11 und kann gegebenenfalls für eine Kühlmittelführung genutzt werden. Es versteht sich, dass auch die Wellenanordnungen 2 gemäß den Figuren 1 bis 4 mit einem solchen beziehungsweise in der Form angepassten rohrförmigen Bauteil 20 gestaltet sein können.

In Figur 8 ist eine erfindungsgemäße Wellenanordnung 2 in einer weiteren Ausführungsform gezeigt. Diese entspricht weitestgehend der Ausführungsform gemäß Figur 7, auf deren Beschreibung insofern Bezug genommen wird. Dabei sind gleiche Einzelheiten mit gleichen Bezugszeichen versehen.

Bei der vorliegenden Ausführungsform gemäß Figur 8 werden die Federabschnitte 7 nach dem Zusammenbau von Wellenrohr 11 und Nabenkörper 4 mittels eines geeigneten Spreizwerkzeugs 30 radial-plastisch verformt. Hierdurch legen sich die Verbindungsflächen der Bauteile 3, 4 mit ausreichender Anpresskraft aneinander an. Es versteht sich, dass ein solches Spreizwerkzeug auch für die in den Figuren 1 bis 6 gezeigten Wellenanordnungen verwendet werden kann.

Alternativ zu den Ausführungsformen gemäß den Figuren 7 und 8 ist auch eine Ausführung denkbar, bei der die Federabschnitte 7 nach dem Zusammenbau von Wellenrohr 11 und Nabenkörper 4 mittels Innenhochdruckumformung radial-plastisch verformt werden.

Bezugszeichenliste

| | |
|---|---|
| 2 | Wellenanordnung |
| 3 | Hohlwelle |
| 4 | Nabenkörper |
| 5 | Wandung |
| 6 | Stützabschnitt |
| 7 | Federabschnitt |
| 8 | Stützfläche |
| 9 | Innenfläche |
| 10 | Innenumfangsfläche |
| 11 | Wellenrohr |
| 12, 12' | Ende |
| 13, 13' | Zapfenelement |
| 14, 14' | Anschlussabschnitt |
| 15 | Innenkontur |
| 16, 16' | Schenkel |
| 17 | Umkehrabschnitt |
| 18 | Übergangsabschnitt |
| 19, 19' | Lagerabschnitt |
| 20 | Bauteil |
| 21 | Außenfläche |
| 30 | Spreizwerkzeug |
| | |
| $\alpha$ | Umfangswinkel |
| A | Querschnittsfläche |
| B | Längsachse |
| d | Wanddicke |
| D | Durchmesser |
| E | E-Modul |
| k | Federrate |
| L | Kennlinie |
| M | Drehmoment |

n    Drehzahl
μ    Querkontraktionszahl
r    Innenradius
R    Außenradius
s    Federweg

**Patentansprüche**

1.  Wellenanordnung umfassend:

    eine Hohlwelle (3) mit einer Drehachse (B),
    einen Nabenkörper (4), der mit einer Innenumfangsfläche mit der Hohlwelle (3) kraftschlüssig verbunden ist,
    wobei die Hohlwelle (3) im Querschnitt betrachtet eine umlaufend geschlossene Wandung (5) mit mehreren über den Umfang verteilten Stützabschnitten (6), die mit dem Nabenkörper (4) in Anlagekontakt sind, und Federabschnitten (7), die von der Innenumfangsfläche des Nabenkörpers (4) beabstandet sind, aufweist,
    wobei Innenflächenbereiche der Federabschnitte (7) auf einem kleineren Radius um die Drehachse (B) liegen, als Innenflächenbereiche der Stützabschnitte (6),
    **dadurch gekennzeichnet,**
    **dass** die Wandung (5) eine variable Dicke ($d_5$) über dem Umfang aufweist, wobei die Dicke ($d_6$) in den Stützabschnitten (6) geringer ist als in den Federabschnitten (7).

2.  Wellenanordnung nach Anspruch 1,
    **dadurch gekennzeichnet,**
    **dass** ein kleinster Innenradius ($r_6$) der Stützabschnitte (6) größer ist, als ein kleinster Innenradius ($r_7$) der Federabschnitte (7).

3.  Wellenanordnung nach Anspruch 1 oder 2,
    **dadurch gekennzeichnet,**

    **dass** sich die Stützabschnitte (6) im Querschnitt betrachtet jeweils über einen Winkelbereich ($\alpha_6$) von mindestens 5°, vorzugsweise mindestens 30° erstrecken, und/oder
    **dass** sich die Stützabschnitte (6) im Querschnitt betrachtet jeweils über einen Winkelbereich ($\alpha_6$) von bis zu 115°, vorzugsweise bis zu 90° erstrecken.

4.  Wellenanordnung nach einem der Ansprüche 1 bis 3,
    **dadurch gekennzeichnet,**

    **dass** sich die Federabschnitte (7) im Querschnitt betrachtet jeweils über einen Winkelbereich ($\alpha_7$) von mindestens 5°, vorzugsweise mindestens 30° erstrecken,
    und/oder
    **dass** sich die Federabschnitte (7) im Querschnitt betrachtet jeweils über einen Winkelbereich ($\alpha_7$) von bis zu 115°, vorzugsweise bis zu 90° erstrecken.

5.  Wellenanordnung nach einem der Ansprüche 1 bis 4,
    **dadurch gekennzeichnet,**
    **dass** die Wandung (5) innerhalb der Stützabschnitte (6) jeweils eine variable Dicke ($d_6$) in Umfangsrichtung aufweist.

6.  Wellenanordnung nach einem der Ansprüche 1 bis 5,
    **dadurch gekennzeichnet,**
    **dass** eine maximale Dicke ($d_7$) der Federabschnitte (7) mindestens 1,1-fach so groß ist, wie eine minimale Dicke ($d_6$) der Stützabschnitte (6), insbesondere mindestens 1,5-fach so groß.

7.  Wellenanordnung nach einem der Ansprüche 1 bis 6,
    **dadurch gekennzeichnet,**
    **dass** die Hohlwelle (3) mindestens drei Stützabschnitte (6) und mindestens drei Federabschnitte (7) aufweist, die abwechselnd über den Umfang angeordnet sind.

**8.** Wellenanordnung nach einem der Ansprüche 1 bis 7,
**dadurch gekennzeichnet,**
**dass** die Stützabschnitte (6) eine an die Innenkontur des Nabenkörpers (4) angepasste Außenkontur aufweisen, die insbesondere kreiszylindrisch ist.

**9.** Wellenanordnung nach einem der Ansprüche 1 bis 8,
**dadurch gekennzeichnet,**
**dass** die Federabschnitte (7) jeweils ausgehend von den daran in Umfangsrichtung angrenzenden Stützabschnitten (6) einen stetig zunehmenden radialen Abstand zu einer gedachten Kreislinie (K) mit Radius (R8) der Außenumfangsfläche (8) der Stützabschnitte (6) aufweisen.

**10.** Wellenanordnung nach einem der Ansprüche 1 bis 9,
**dadurch gekennzeichnet,**
**dass** die Federabschnitte (7) so gestaltet sind, dass diese in montiertem Zustand des Nabenkörpers (4) im Wesentlichen Druckspannungen unterliegen.

**11.** Wellenanordnung nach einem der Ansprüche 1 bis 10,
**dadurch gekennzeichnet,**

**dass** die Hohlwelle (3) als Motorwelle für einen Elektromotor gestaltet ist und ein Wellenrohr (11) sowie zwei an den Enden (12, 12') daran angeschlossene Zapfenelemente (13, 13') aufweist, und
**dass** der Nabenkörper (4) ein Rotorblechpaket aus mehreren Rotorblechen aufweist.

**12.** Wellenanordnung nach Anspruch 11,
**dadurch gekennzeichnet,**
**dass** zumindest eines der Zapfenelemente (13, 13') einen Anschlussabschnitt (14, 14') zum Verbinden mit einem Endabschnitt (12, 12') des Wellenrohres (11) aufweist, wobei die Umfangskontur des Anschlussabschnitts (14, 14') an die Gegenkontur (15) des Wellenrohres (11) angepasst ist, so dass das Zapfenelement (13, 13') und das Wellenrohr (11) formschlüssig ineinandergreifen.

**13.** Wellenanordnung nach einem der Ansprüche 1 bis 12,
**dadurch gekennzeichnet,**

**dass** die Hohlwelle (3) eine Oberflächenrauigkeit von mindestens 0,1 Rz aufweist und/oder
**dass** der Nabenkörper (4) eine Oberflächenrauigkeit von mindestens 0,1 Rz aufweist.

**14.** Wellenanordnung nach einem der Ansprüche 1 bis 13,
**dadurch gekennzeichnet,**

**dass** die Hohlwelle (3) so ausgelegt ist, dass diese einen radialen Federweg (s3) aufweist, für den folgendes gilt:

$$s3 = (R3max - R3min) > \frac{R_{p0,2} * A}{E * \pi * D_{3a}} * \left(1 - \frac{\pi * D_{3a}^2}{2 * A} - \mu\right)$$

wobei
R3max der maximale Radius der Welle (3) in unmontiertem Zustand,
R3min der maximale Radius der Welle (3) in maximal radial-elastisch eingefedertem Zustand,
D3a das Doppelte des maximalen Radius (R3max) der Welle (3) in unmontiertem Zustand,
E das E-Modul der Welle (3),
A die Querschnittsfläche der Welle (3)
$\mu$ die Querkontraktionszahl der Welle (3)
Rp0,2 die Streckgrenze des Werkstoffs der Welle (3) sind.

**15.** Wellenanordnung nach einem der Ansprüche 1 bis 14,
**dadurch gekennzeichnet,**

**dass** die Hohlwelle (3) so ausgelegt ist, dass sie eine Federrate (k3) aufweist, für die folgendes gilt:

$$k3 = \frac{F_{rad}}{U_{34}} < \pi * l_{34} * E * \left(1 - \frac{\pi * D_{3a}^2}{2 * A} - \mu\right)^{-1}$$

wobei
Frad die wirksamen Radialkräfte zwischen Welle (3) und Nabenkörper (4) in montiertem Zustand,
U34 das wirksame Übermaß zwischen dem größten Außendurchmesser (D3a) der Welle (3) und dem kleinsten Innendurchmesser (D4i) des Nabenkörpers (4) in unmontiertem Zustand,
$E$ das E-Modul der Welle (3),
$l_{34}$ die Länge der Fügefläche zwischen Welle (3) und Nabenkörper (4),
D3a das Doppelte des maximalen Radius (R3max) der Welle (3) in unmontiertem Zustand, und
$\mu$ die Querkontraktionszahl der Welle (3)
sind.

**Claims**

1. Shaft assembly comprising:

   a hollow shaft (3) with an axis of rotation (B),
   a hub body (4) which is connected to the hollow shaft (3) in a force locking manner,
   wherein the hollow shaft (3), viewed in cross-section, comprises a circumferentially closed wall (5) with a plurality of circumferentially distributed support portions (6) being in abutting contact with the hub body (4), and with spring portions (7) spaced from an inner circumferential face of the hub body (4), wherein inner surface regions of the spring portions (7) lie on a smaller radius around the axis of rotation (B) than inner surface regions of the support portions (6),
   **characterized in**
   **that** the wall (5) has a varying thickness (d5) around the circumference, with the thickness (d6) in the support portions (6) being less than in the spring portions (7).

2. Shaft assembly according to claim 1,
   **characterized in**
   **that** a smallest inner radius (r6) of the support portions (6) is larger than a smallest inner radius (r7) of the spring portions (7).

3. Shaft assembly according to claim 1 or 2,
   **characterized in**

   **that** the support portions (6), viewed in cross section, respectively extend over an angular range ($\alpha$6) of at least 5°, preferably at least 30°, and/or
   **that** the support portions (6), viewed in cross section, respectively extend over an angular range ($\alpha$6) of up to 115°, preferably up to 90°.

4. Shaft assembly according to any one of claims 1 to 3,
   **characterized in**

   **that** the spring portions (7), viewed in cross section, respectively extend over an angular range ($\alpha$7) of at least 5°, preferably at least 30°,
   and/or
   **that** the spring portions (7), viewed in cross section, respectively extend over an angular range ($\alpha$7) of up to 115°, preferably up to 90°.

5. Shaft assembly according to any one of claims 1 to 4,
   **characterized in**
   **that** the wall (5) has a varying thickness (d6) in the circumferential direction within each of the support portions (6).

6. Shaft assembly according to any one of claims 1 to 5,
**characterized in**
**that** a maximum thickness (d7) of the spring portions (7) is at least 1.1 times as large as a minimum thickness (d6) of the support portions (6), in particular at least 1.5 times as large.

7. Shaft assembly according to any one of claims 1 to 6,
**characterized in**
**that** the hollow shaft (3) includes at least three support portions (6) and at least three spring portions (7) arranged alternately along the circumference.

8. Shaft assembly according to any one of claims 1 to 7,
**characterized in**
**that** the support portions (6) comprise an outer contour adapted to the inner contour of the hub body (4), which is in particular circular cylindrical.

9. Shaft assembly according to any one of claims 1 to 8,
**characterized in**
**that**, starting from the support portions (6) respectively adjoining in circumferential direction, the spring portions (6) have a continuously increasing radial distance from an imaginary circular line (K) with radius (R8) of the outer circumferential face (8) of the support portions (6).

10. Shaft assembly according to any one of claims 1 to 9,
**characterized in**
**that** the spring portions (7) are configured such that they are substantially subject to compressive stresses in the assembled state of the hub body (4).

11. Shaft assembly according to any one of claims 1 to 10,
**characterized in**

**that** the hollow shaft (3) is configured as a motor shaft for an electric motor and has a shaft tube (11) and two journal elements (13, 13') connected thereto at the ends (12, 12'), and
**that** the hub body (4) has a rotor laminate stack comprising a plurality of rotor laminates.

12. Shaft assembly according to claim 11,
**characterized in**
**that** at least one of the journal elements (13, 13') comprises a connecting portion (14, 14') for connecting to an end portion (12, 12') of the shaft tube (11), with the circumferential contour of the connecting portion (14, 14') being adapted to the mating contour (15) of the shaft tube (11), so that the journal element (13, 13') and the shaft tube (11) engage into each other in a form-locking manner.

13. Shaft assembly according to any one of claims 1 to 12,
**characterized in**

**that** the hollow shaft (3) has a surface roughness of at least 0.1 Rz and/or
**that** the hub body (4) has a surface roughness of at least 0.1 Rz.

14. Shaft assembly according to any one of claims 1 to 13,
**characterized in**

**that** the hollow shaft (3) is configured so as to have a radial spring travel (s3) for which the following applies:

$$s3 = (R3max - R3min) > \frac{R_{p0,2} * A}{E * \pi * D_{3a}} * \left( 1 - \frac{\pi * D_{3a}^2}{2 * A} - \mu \right)$$

wherein
R3max is the maximum radius of the shaft (3) in unmounted condition,
R3min is the maximum radius of the shaft (3) in maximum radial-elastic deflected state,

D3a is twice the maximum radius (R3max) of the shaft (3) in unmounted condition,

E is the modulus of elasticity of the shaft (3),

A is the cross-sectional area of the shaft (3)

$\mu$ is the transverse contraction coefficient of the shaft (3)

Rp0.2 is the yield strength of the shaft material (3).

15. Shaft assembly according to any one of claims 1 to 14,
**characterized in**

**that** the hollow shaft (3) is configured so as to have a spring rate (k3) for which the following applies:

$$k3 = \frac{F_{rad}}{U_{34}} < \pi * l_{34} * E * \left(1 - \frac{\pi * D_{3a}^2}{2 * A} - \mu\right)^{-1}$$

wherein

Frad are the effective radial forces between the shaft (3) and the hub body (4) in assembled condition,

U34 is the effective interference between the largest outside diameter (D3a) of the shaft (3) and the smallest inner diameter (D4i) of the hub body (4) in the unmounted condition,

$E$ is the modulus of elasticity of the shaft (3),

$l_{34}$ is the length of the mating surface between the shaft (3) and the hub body (4),

D3a is twice the maximum radius (R3max) of the shaft (3) in unmounted condition, and

$\mu$ is the transverse contraction coefficient of the shaft (3).

**Revendications**

1. Dispositif d'arbre comprenant:

un arbre creux (3) avec un axe de rotation (B),

un corps de moyeu (4), qui est relié par force à l'arbre creux (3),

dans lequel l'arbre creux (3), vu en coupe transversale, comprend une paroi (5) fermée périphériquement avec plusieurs parties de support (6) réparties sur la périphérie, qui sont en contact d'appui avec le corps de moyeu (4), et des parties de ressort (7) qui sont espacées d'une surface périphérique intérieure du corps de moyeu (4), dans lequel des zones de surface intérieure des parties de ressort (7) se trouvent sur un radius plus petit autour de l'axe de rotation (B) que des zones de surface intérieure des parties de support (6),

**caractérisé en ce que**

la paroi (5) a une épaisseur variable (d5) sur la circonférence, l'épaisseur (d6) dans les parties de support (6) étant plus faible que dans les parties de ressort (7).

2. Dispositif d'arbre selon la revendication 1,
**caractérisé en ce**
**qu'**un plus petit radius intérieur (r6) des parties de support (6) est plus grand qu'un plus petit radius intérieur (r7) des parties de ressort (7).

3. Dispositif d'arbre selon la revendication 1 ou 2,
**caractérisé en ce**
**que** les parties de support (6), vues en coupe transversale, s'étendent chacune sur une plage angulaire ($\alpha$6) d'au moins 5°, de préférence d'au moins 30°, et/ou que les parties de support (6), vues en coupe transversale, s'étendent chacune sur une plage angulaire ($\alpha$6) allant jusqu'à 115°, de préférence jusqu'à 90°.

4. Dispositif d'arbre selon l'une quelconque des revendications 1 à 3,
**caractérisé en ce**

**que** les parties de ressort (7), vues en coupe transversale, s'étendent chacune sur une plage angulaire ($\alpha$7) d'au moins 5°, de préférence d'au moins 30°, et/ou

**que** les parties de ressort (7), vues en coupe transversale, s'étendent chacune sur une plage angulaire ($\alpha$7)

allant jusqu'à 115°, de préférence jusqu'à 90°.

5. Dispositif d'arbre selon l'une quelconque des revendications 1 à 4,
**caractérisé en ce**
**que** la paroi (5) présente à l'intérieur des parties de support (6) respectivement une épaisseur variable (d6) dans la direction circonférentielle.

6. Dispositif d'arbre selon l'une quelconque des revendications 1 à 5,
**caractérisé en ce**
**qu'**une épaisseur maximale (d7) des parties de ressort (7) est au moins 1,1 fois plus grande qu'une épaisseur minimale (d6) des parties de support (6), en particulier au moins 1,5 fois plus grande.

7. Dispositif d'arbre selon l'une quelconque des revendications 1 à 6,
**caractérisé en ce**
**que** l'arbre creux (3) comprend au moins trois parties de support (6) et au moins trois parties de ressort (7) qui sont disposées en alternance sur la circonférence.

8. Dispositif d'arbre selon l'une quelconque des revendications 1 à 7,
**caractérisé en ce**
**que** les parties de support (6) présentent un contour extérieur adapté au contour intérieur du corps de moyeu (4), qui est en particulier cylindrique circulaire.

9. Dispositif d'arbre selon l'une quelconque des revendications 1 à 8,
**caractérisé en ce**
**que** les parties de ressort (7) présentent chacune, en partant des parties de support (6) qui leur sont adjacentes dans la direction périphérique, une distance radiale toujours croissante par rapport à une ligne circulaire imaginaire (K) de radius (R8) de la surface périphérique extérieure (8) des parties de support (6).

10. Dispositif d'arbre selon l'une quelconque des revendications 1 à 9,
**caractérisé en ce**
**que** les parties de ressort (7) sont conçues de telle sorte qu'elles sont soumises essentiellement à des contraintes de compression lorsque le corps de moyeu (4) est monté.

11. Dispositif d'arbre selon l'une quelconque des revendications 1 à 10,
**caractérisé en ce**

**que** l'arbre creux (3) est conçu comme arbre moteur pour un moteur électrique et présente un tube d'arbre (11) ainsi que deux éléments de tourillon (13, 13') qui y sont raccordés aux extrémités (12, 12'), et
**que** le corps de moyeu (4) présente un paquet de tôles de rotor composé de plusieurs tôles de rotor.

12. Dispositif d'arbre selon la revendication 11,
**caractérisé en ce**
**qu'**au moins l'un des éléments de tourillon (13, 13') présente un tronçon de raccordement (14, 14') pour la liaison avec un tronçon d'extrémité (12, 12') du tube d'arbre (11), le contour périphérique du tronçon de raccordement (14, 14') étant adapté au contre-contour (15) du tube d'arbre (11), de sorte que l'élément de tourillon (13, 13') et le tube d'arbre (11) s'engagent l'un dans l'autre par complémentarité de forme.

13. Dispositif d'arbre selon l'une quelconque des revendications 1 à 12, **caractérisé en ce**
**que** l'arbre creux (3) présente une rugosité de surface d'au moins 0,1 Rz et/ou en ce que le corps de moyeu (4) présente une rugosité de surface d'au moins 0,1 Rz.

14. Dispositif d'arbre selon l'une quelconque des revendications 1 à 13, **caractérisé en ce**

**que** l'arbre creux (3) est conçu de telle sorte que celui-ci présente une course élastique radiale (s3) pour laquelle on a ce qui suit :

$$s3 = (R3max - R3min) > \frac{R_{p0,2} * A}{E * \pi * D_{3a}} * \left( 1 - \frac{\pi * D_{3a}^2}{2 * A} - \mu \right)$$

où sont

R3max est le radius maximal de l'arbre (3) à l'état non monté,

R3min est le radius maximal de l'arbre (3) à l'état de compression radiale élastique maximale,

D3a est le double du radius maximal (R3max) de l'arbre (3) à l'état non monté, E est le module d'élasticité de l'arbre (3),

A est la surface de la section de l'arbre (3)

$\mu$ le coefficient de contraction transversale de l'arbre (3) Rp0,2 la limite d'élasticité du matériau de l'arbre (3.

15. Dispositif d'arbre selon l'une quelconque des revendications 1 à 14, **caractérisé en ce**

**que** l'arbre creux (3) est conçu de telle sorte qu'il présente une raideur de ressort (k3) pour laquelle on a ce qui suit :

$$k3 = \frac{F_{rad}}{U_{34}} < \pi * l_{34} * E * \left( 1 - \frac{\pi * D_{3a}^2}{2 * A} - \mu \right)^{-1}$$

où sont

Frad les forces radiales effectives entre l'arbre (3) et le corps du moyeu (4) à l'état monté,

U34 l'interférence effective entre le plus grand diamètre extérieur (D3a) de l'arbre (3) et le plus petit diamètre intérieur (D4i) du corps du moyeu (4) à l'état non monté,

E est le module d'élasticité de l'arbre (3),

$l_{34}$ la longueur de la surface d'assemblage entre l'arbre (3) et le corps du moyeu (4),

D3a est le double du radius maximal (R3max) de l'arbre (3) à l'état non monté, et

$\mu$ le coefficient de contraction transversale de l'arbre (3).

Fig. 1A

Fig. 1B

Fig. 1C

Fig. 1D

Fig. 1E

Fig. 1F

Fig. 2

Fig. 3A

Fig. 3B

Fig. 4A

Fig. 4B

Fig. 4C

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19624048
- DE 102010047445 A1
- DE 10224477 A1
- DE 102010039008 A1
- DE 19521755 C1
- WO 9965643 A1
- DE 102015012912 A1
- DE 102016202416 A1
- DE 102016215760 A1
- DE 102016215979 A1
- DE 102008043488 A1